# EUROPÄISCHE PATENTANMELDUNG

(11) **EP 2 557 278 A2**
(43) Veröffentlichungstag der Anmeldung: **13.02.2013**
(21) Anmeldenummer: 12178585.1
(22) Anmeldetag: 31.07.2012
(51) Int. Cl.: F01D 25/34

(54) **Rotordreheinrichtung**

(30) Priorität: 11.08.2011 DE 102011080836
(71) Anmelder: SIEMENS AKTIENGESELLSCHAFT, 80333 München (DE)
(72) Erfinder: Grund, Christoph, 02827 Görlitz (DE)

(57) **Zusammenfassung**

Rotordreheinrichtung (1) zum Antreiben eines Rotors (2) einer Turbomaschine, insbesondere einer Dampfturbine, und Turbomaschine mit einer solchen Rotordreheinrichtung (1), wobei der Rotor (2) durch wenigstens ein Magnetlager (3) gelagert ist und das Magnetlager (3) mittels eines Fluids (4) kühlbar ist. Das Fluid (4) zum Kühlen des Magnetlager (3) ist zusätzlich zum Antreiben der Rotordreheinrichtung (1) nutzbar.

## Beschreibung

Die Erfindung betrifft eine Rotordreheinrichtung zum Antreiben eines Rotors einer Turbomaschine sowie eine Turbomaschine mit einem Rotor und der Rotordrehvorrichtung, mit der der Rotor antreibbar ist.

Turbomaschinen und insbesondere Dampfturbinen werden bei hohen Temperaturen von teilweise über 500°C betrieben. Während des Betriebs heizt sich der Rotor der Turbomaschinen dabei entsprechend stark auf. Beim Abschalten bzw. beim Herunterfahren der Turbomaschine kühlt der Rotor langsam auf die Umgebungstemperatur hinunter. Die Abkühlung des Rotors würde beim Stillstand des Rotors nicht vollkommen gleichmäßig verlaufen, wodurch es zu einer Durchbiegung des Rotors kommen würde. Die Durchbiegung des Rotors würde wiederum zu größeren Problemen beim Anfahren der Turbine führen, da in diesem Fall Unwuchtungen auftreten und es zu Anstreifschäden der Laufschaufeln am Turbinengehäuse kommen kann. Um dies zu vermeiden, müsste der Rotor zunächst wieder vollständig erwärmt werden. Dies kann aufgrund der großen Massen jedoch mehrere Stunden bis Tage dauern. Für Turbomaschinen, die häufiger an-und abgefahren werden, ist dieses Verfahren somit wenig geeignet. Aus diesem Grund weisen solche Turbomaschinen üblicherweise Rotordreheinrichtungen auf. Eine solche Rotordreheinrichtung ist beispielsweise aus der EP 2 161 416 A2 bekannt. Für eine solche Rotordrehvorrichtung weist der Rotor der Dampfturbine eine Außenverzahnung auf, die im Drehbetrieb (Turn-Betrieb) im Eingriff mit der Rotordrehvorrichtung ist. Eine solche Rotordreheinrichtung ist sehr aufwendig im Aufbau und damit sehr wartungsintensiv und anfällig. Zudem ist am Rotor eine Außenverzahnung vorzusehen, wodurch die Kosten für den Rotor ansteigen und die Baulänge des Rotors zunimmt. Die Rotordreheinrichtung wird üblicherweise durch einen Elektromotor, eine Handdreheinrichtung, einen Hubkolben oder ein Peltonrad realisiert.

Wird der Rotor der Turbomaschine mittels wenigstens eines aktiven Magnetlagers gelagert, so ist zusätzlich eine Kühlung des Magnetlagers notwendig, da die Rotorblechung des Magnetlagers eine beschränkte Temperaturbeständigkeit aufweist. Die Kühlung der Blechung erfolgt üblicherweise über Kühlluft.

Ausgehend vom Stand der Technik ist es Aufgabe der vorliegenden Erfindung, eine Rotordreheinrichtung für einen magnetgelagerten Rotor bereitzustellen, welcher einfacher aufgebaut und weniger wartungsaufwendig ist. Des Weiteren ist es Aufgabe der Erfindung eine Turbomaschine mit einem magnetgelagerten Rotor und einer einfacheren Rotordreh-einrichtung bereitzustellen.

Die Aufgabe wird hinsichtlich der Rotordreheinrichtung durch die Merkmale des unabhängigen Patentanspruch 1 gelöst. Hinsichtlich der Turbomaschine wird die Erfindung durch die Merkmale des unabhängigen Patentanspruchs 6 gelöst.

Weitere Vorteile der Erfindung, die einzeln oder in Kombination miteinander einsetzbar sind, sind Gegenstand der Unteransprüche.

Die erfindungsgemäße Rotordreheinrichtung zum Antreiben eines Rotors einer Turbomaschine, insbesondere einer Dampfturbine, wobei der Rotor durch wenigstens ein Magnetlager gelagert ist und das Magnetlager mittels eines Fluides kühlbar ist, zeichnet sich dadurch aus, dass das Fluid zusätzlich zum Antreiben der Rotordreheinrichtung nutzbar ist. Hierdurch kann auf einen zusätzlichen Antrieb der Rotordreheinrichtung mittels Elektromotor, Hubkolben ect. verzichtet werden. Dies führt zum einen zu einer erheblichen Kosteneinsparung, zum anderen kann die Baulänge der Rotorwelle verringert werden. Aufgrund des fehlenden zusätzlichen Antriebs wird die Anfälligkeit der Rotordreheinrichtung deutlich reduziert und die Betriebssicherheit erhöht.

Eine Ausgestaltung der Erfindung sieht vor, dass die Rotordreheinrichtung als Turbine ausgebildet ist, welche mittels des Fluids antreibbar ist. Die Ausbildung als Turbine bietet den Vorteil, dass die Strömungsenergie des Fluids direkt in Bewegungsenergie umgesetzt werden kann. Die Strömungsverluste sind dabei gering, wodurch ein hoher Wirkungsgrad und ein energieeffizienter Betrieb der Rotordreheinrichtung gegeben ist.

Eine Ausgestaltung der Erfindung sieht vor, dass als Fluid zur Kühlung der Magnetlager und zum Betreiben der Rotordreheinrichtung Luft verwendet wird. Da die Kühlung der Blechung der Magnetlager üblicherweise schon mit Kühlluft erfolgt, sind keine großen konstruktiven Änderungen hinsichtlich der Kühlung der Magnetlager notwendig.

Eine weitere Ausgestaltung der Erfindung sieht vor, dass zur Kühlung des Magnetlagers, wenigstens eine Bohrung und/oder Ausnehmung im Rotor vorgesehen ist, durch die das Fluid zur Kühlung des Magnetlagers leitbar ist. Durch die Bohrung und/oder Ausnehmung im Rotor kann die Kühlluft nahe an die Blechung des Magnetlagers auf der Rotorwelle herangeführt werden, wodurch eine gute Wärmeabführung gewährleistet ist.

Eine weitere Ausgestaltung der Erfindung sieht dabei vor, dass die Rotordreheinrichtung zumindest eine Laufschaufel umfasst, die mittel- oder unmittelbar am Rotor befestigt ist. Aufgrund der magnetischen Lagerung des Rotors ergibt sich nur eine minimale Reibung, wodurch nur geringe Kräfte bzw. Drehmomente notwendig sind, um den Rotor in Drehung zu halten.

Die erfindungsgemäße Turbomaschine, insbesondere Dampfturbine, mit einem magnetgelagerten Rotor, nach einem der vorherigen Ansprüche, zeichnet sich dadurch aus, dass das Fluid zum Kühlen des Magnetlagers auch zum Antreiben der Rotordreheinrichtung nutzbar ist. Hierdurch wird zum einen die vorhandene Strömungsenergie des Fluids genutzt und zum anderen kann auf zusätzliche Antriebe beispielsweise Hubkolbenmotoren oder Elektromotoren verzichtet werden. Die Rotordreheinrichtung ist somit besonders einfach und kostengünstig aufgebaut und aufgrund der Bauart verkürzt sich die Rotorlänge gegenüber den bislang ausgeführten Rotordreh-einrichtungen.

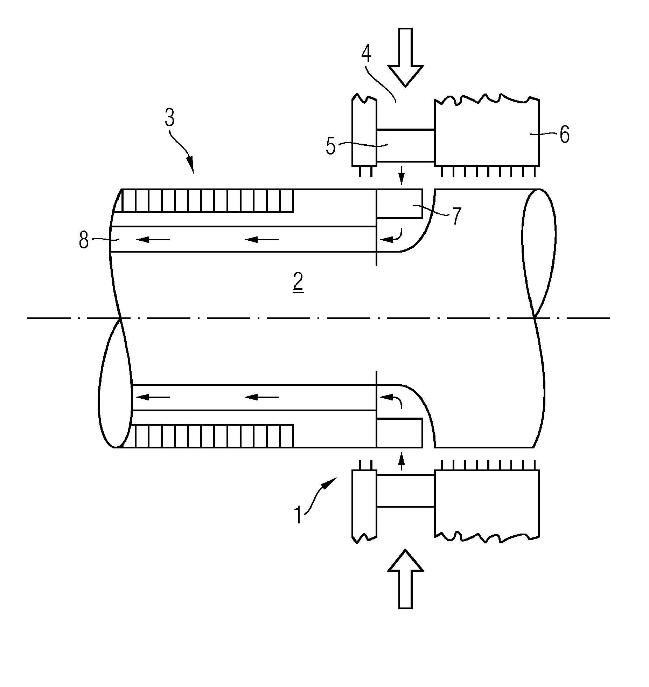

Ausführungsbeispiele und weitere Vorteile der Erfindung werden im Folgenden anhand von Figur 1 dargestellt. Figur 1 zeigt lediglich eine schematische Darstellung der erfindungsgemäßen Rotordreheinrichtung, wobei nur die wesentlichen Bauteile der Rotordreheinrichtung sowie der Turbomaschine dargestellt sind.

Figur 1 zeigt eine Rotordreheinrichtung 1 zum Antreiben eines Rotors 2 einer Turbomaschine. Bei der Turbomaschine, von der nur ein Teil des Turbinengehäuses 6 dargestellt ist handelte es sich um eine Dampfturbine. Der Rotor 2 der Dampfturbine ist über ein Magnetlager 3 gelagert. Bei dem Magnetlager 3 handelt es sich um ein Aktivmagnetlager. Von dem Magnetlager 3 ist nur die Rotorblechung, welche auf dem Rotor 2 sitzt, dargestellt. Die Rotorblechung des Magnetlagers 3 weist nur eine beschränkte Temperaturbeständigkeit auf. Aus diesem Grund ist es erforderlich, die Rotorblechung während des Betriebes der Dampfturbine zu kühlen. Als Kühlfluid wird Kühlluft 4 verwendet. Um eine möglichst gute Kühlung der Rotorblechung zu erreichen, sind im Rotor 2 Bohrungen 8 vorgesehen, durch die die Kühlluft 4 hindurchströmen kann. Die Kühlluft 4 gelangt somit sehr nah an die Rotorblechung des Magnetlagers 3 und sorgt so für eine gute Wärmeabfuhr. Anstelle der Bohrungen 8 können auch Ausnehmungen im Rotor vorgesehen werden, welche einen ähnlichen Effekt auf die Kühlung der Rotorblechung haben.

Die Kühlluft 4 dient zusätzlich zum Antrieb der Rotordreheinrichtung 1. Die Rotordreheinrichtung 1 sorgt beim Abschalten bzw. beim Herunterfahren der Turbomaschine für den erforderlichen Turnbetrieb und damit für eine gleichmäßige Abkühlung insbesondere des Rotors 2.

Um die Strömungsenergie der Kühlluft 4 möglichst effizient zu nutzen, ist die Rotordreheinrichtung 1 in Turbinenbauweise ausgebildet. Hierzu sind über den Umfang, leicht bestandet zum Rotor 2, Leitschaufeln 5 vorgesehen, die am Turbinengehäuse 6 befestigt sind und die Luftströmung auf die am Rotor 2 ausgebildeten und gleichmäßig über den Umfang des Rotors 2 verteilten Laufschaufeln 7 leiten. Die Leitschaufeln 5 können unmittelbar am Turbinengehäuse 6 angeordnet sein oder mittelbar beispielsweise mittels eines Trägerrings im Turbinengehäuse 6 fixiert werden.

Falls es aufgrund der Bauform bzw. aufgrund von Platzproblemen nicht möglich sein sollte, die Leitschaufeln 5 gleichmäßig über den Umfang zu verteilen, können diese auch ungleichmäßig beispielsweise in einem Kreissegment angeordnet werden. Hierdurch verringert sich zwar der Wirkungsgrad der Rotordreheinrichtung 1 leicht, allerdings reichen auf Grund der reibungsarmen Magnetlagerung, schon geringe Drehmomente aus, um den Rotor 2 in Drehbewegung zu halten.

Die Zuströmung zu den Laufschaufeln 7 ist auch ohne Leitbeschaufelung möglich. Die Zuführung wird in diesem Fall Spiralförmig ausgeführt.

Da die vorhandene Kühleinrichtung 1 in die Rotordreheinrichtung 1 mit eingebunden wird, kann der Rotor 2 deutlich kürzer ausgebildet werden, als bei üblichen Rotordreheinrichtungen. Insbesondere kann auf die Ausbildung einer Au-βenverzahnung am Rotor 2 verzichtet werden. Hierdurch lassen sich zusätzliche Kosteinsparungen erzielen.

Die Rotordreheinrichtung 1 ist nahezu wartungsfrei und unempfindlich gegen Defekte. Da die sowieso notwendige Kühlluft 4 gleichzeitig zum Antreiben der Rotordreheinrichtung 1 genutzt wird, entstehen im Wesentlichen keine zusätzlichen Energiekosten zum Betreiben der Rotordreheinrichtung 1.

Die erfindungsgemäße Turbinenmaschine, mit der erfindungsgemäßen Rotordreheinrichtung 1 zeichnet sich somit durch eine besonders kurze Bauform und einen besonders energieeffizienten Betrieb der Rotordreheinrichtung 1 aus. Die erfindungsgemäße Turbomaschine ist unempfindlich und besonders einfach im Aufbau. Hierdurch ergeben sich zahlreiche Vorteile gegenüber den bislang verwendeten Rotordreheinrichtungen für die Turbomaschine.

## Patentansprüche

1. Rotordreheinrichtung (1) zum antreiben eines Rotors (2) einer Turbomaschine, insbesondere einer Dampfturbine, wobei der Rotor (2) durch wenigstens ein Magnetlager (3) gelagert ist und das Magnetlager (3) mittels eines Fluids (4) kühlbar ist,
**dadurch gekennzeichnet, dass**
das Fluids (4) zusätzlich zum Antreiben der Rotordreheinrichtung (1) nutzbar ist.

2. Rotordreheinrichtung (1) nach Anspruch 1,
**dadurch gekennzeichnet, dass**
die Rotordreheinrichtung (1) als Turbine ausgebildet ist, welche mittels des Fluides (4) antreibbar ist.

3. Rotordreheinrichtung (1) nach Anspruch 2,
**dadurch gekennzeichnet, dass**
die Rotoreinrichtung (1) zumindest eine Laufschaufel (7) umfasst, die mittel- oder unmittelbar am Rotor (2) befestigt ist.

4. Rotordreheinrichtung (1) nach einem der vorherigen Ansprüche,
**dadurch gekennzeichnet, dass**
als Fluid (4) Kühlluft verwendet wird.

5. Rotordreheinrichtung (1) nach einem der vorherigen Ansprüche,
**dadurch gekennzeichnet, dass**
zur Kühlung des Magnetlagers (3), wenigstens eine Bohrung und/oder Ausnehmung (8) im Rotor (2) vorgesehen ist, durch die das Fluid (4) zur Kühlung des Magnetlagers (3) leitbar ist.

6. Turbomaschine, insbesondere Dampfturbine, mit einem magnetgelagerten Rotor (2), nach einem der vorherigen Ansprüche, wobei das Fluid (4) zum Kühlen des Magnetlagers (3) auch zum antreiben der Rotoreinrichtung (1) nutzbar ist.
